# EUROPÄISCHE PATENTANMELDUNG

(11) **EP 4 631 685 A2**
(43) Veröffentlichungstag der Anmeldung: **15.10.2025**
(21) Anmeldenummer: 25169054.1
(22) Anmeldetag: 08.04.2025
(51) Int. Cl.: B27C 3/00, B23B 35/00, B23B 47/28

(54) **SELBSTAUSRICHTENDE BOHRLEHRE**

(30) Priorität: 09.04.2024 DE 102024109833
(71) Anmelder: Vanjin, Igor, 83413 Fridolfing (DE)
(72) Erfinder: Vanjin, Igor, 83413 Fridolfing (DE)
(74) Vertreter: Uphoff, Georg Josef

(57) **Zusammenfassung**

Bohrlehre/Schablone (1), welche sich zur geometrischen Festlegung der Bohrungen/Einbringstellen (2) anhand des Werkstücks (3) und am Werkstück (3) mittels einer von der Bohrlehre/Schablone (1) ausgehenden auf einen Referenzpunkt/Zentrierpunkt (4) einwirkenden Kraft (5) stabil selbst ausrichtet bzw. fixiert, vorzugsweise wobei die einwirkende Kraft (5) durch ein Federelement (6) erzeugt wird.

## Beschreibung

Die Erfindung betrifft eine selbstausrichtende Bohrlehre/Schablone, die zugleich am Werkstück fixiert wird. Vorzugsweise soll diese Bohrlehre/Schablone im Bereich des Einbaus von Türdrückergarnituren, Schlössern und Rosetten und dergleichen Anwendung finden und eine schnelle sichere Verwendung gewährleisten.

Bohrlehren haben grundsätzlich die Aufgabe anhand der aufgebrachten Schablone zur Bohrlehre fluchtende Bohrlöcher geometrisch festzulegen und durch Durchführung eines Bohrers- oder Vertiefungselements im Werkstück auszuführen, dass ein entsprechendes Bauelement mittels eines Befestigungsmittels bspw. einer Schraube, eines Dübels oder sonstigen Verbindungstiftes verbunden werden kann. Dies ermöglicht die zügige Durchführung von Bohrungen bzw. der Einbringung von Befestigungsmitteln ohne dass immer wieder neu ausgemessen werden muss. Manche Werkstücke können von vornherein nur auf diese Weise hergestellt werden.

Gemeinsam ist vielen Bohrlehren, die Festlegung eines Referenz- oder Zentrierpunktes anhand diesem die Bohrlehre angelegt und/oder fixiert wird, um im Verhältnis hierzu die Bohrungen zu setzen. Dieser wird häufig durch bloßes Anhalten an das Werkstück festgelegt, aber auch mittels von Zentrier- und Referenzelementen, die bspw. in Referenzpunkte bzw. Referenzbohrungen eingebracht werden, um bspw. einem Verrutschen vorzubeugen.

Übliche Bohrlehren im Bereich des Einbaus von Türdrückergarnituren und Schlössern haben bspw. Referenzelemente (Zapfen), die in die vorhandenen Bohrlöcher für die Einbringung des Schlosses und des Türdrückervierkants eingebracht werden. So kann bspw. über diese beide Elemente eine entsprechend große Bohrlehre auch einer vertikal eingebauten Tür festgelegt und fixiert werden, so dass die Bohrlöcher bspw. für eine Türdrückergarnitur sicher ausgeführt werden können. Hier ergibt sich bereits bei der Ausgestaltung der Zapfen das Problem, dass die auf Schlösser und Türdrücker angewendeten Normen dazu führen, dass die Einbringtiefen teilweise je nach Land und Hersteller bspw. bei der Schlossnuß stark variieren.

Vorstehende handelsübliche Bohrlehren im Bereich der Türmontage versagen bereits dann, wenn kein Loch bspw. für ein Türschloss vorhanden ist, sondern nur für den Türdrückervierkant, wie dies bei fast 30 % der Türen mittlerweile der Fall ist. Wobei auch hier zu beachten ist, dass Türen zwischenzeitlich immer mehr nur über den Türdrücker bspw. mittels axial wirkender Verriegelungen gesperrt werden, so dass die Nutzung handelsüblicher Bohrschablonen immer mehr zurückgeht.

Bohrschablonen, die nur anhand eines Referenz- bzw. Zentrierpunktes angehalten werden sind meist sehr umständlich zur benutzen und deren Ausrichtung unsicher. Insbesondere müssen die entsprechenden Bohrschablonen vom Monteur anhand der vertikalen Tür umständlich angehalten werden. Aufgrund der umständlichen und unsicheren Handhabung kommt es zu Fehlbohrungen aufgrund einer unrichtigen geometrischen Anordnung der Bohrlöcher.

Denkbar ist hier ggf. die Bohrschablone in Referenz bspw. zur Türkante mittels eines Referenzlineals/Abstandslehre und eines verfahrbaren Ritz-/Schiebeblocks anzuhalten und die Bohrung zu bestimmen. Hier muss bei der Montage an der vertikalen Tür immer eine Hand freibleiben und selbst wenn der Anwender die Elemente verklemmt, besteht die Gefahr, dass die Erschütterungen bei der Bohrung bzw. die Bohrschablone lösen.

Im Stand der Technik wird das Problem nicht bei Türbohrlehren behandelt, sondern vor allem bei Dübelbohrlehren, bei welchen das Referenz- und Zentrierproblem bei zuvor gesetzten Bohrungen immer wieder auftaucht:
Aus der DE4228285A1 ist ein Hilfsgerät zum Bohren von Dübellöchern bekannt, also eine Bohrlehre bekannt, die einen mit einem zu bohrenden Plattenkörpern in Anlage bringbaren Grundkörper aufweist. Die Vorrichtung umfasst zudem wenigstens ein Zentrierelement zum Ausrichten des Grundkörpers relativ zum Plattenkörper, wobei das mindestens eine Zentrierelement unmittelbar am Grundkörper angeordnet oder dem Grundkörper zumindest zugeordnet ist. Das Zentrierelement wird insbesondere an einem in einem der Plattenkörper zuvor erzeugten Dübelloch ausgerichtet. Des Weiteren umfasst die Vorrichtung eine verstellbar am Grundkörper aufgenommene Bohrschablone, welche mehrere Führungslöcher für Bohrwerkzeuge unterschiedlichen Durchmessers aufweist. Diese Bohrlehre ist zweiteilig aus einem Grundkörper und einer Bohrlehre aufgebaut. In Abhängigkeit von der Größe des im Plattenkörper zu erzeugenden Dübelloches wird die Bohrschablone am Grundkörper verstellt. Dazu wird ein jeweils zum Einbringen in einen Plattenkörper benötigtes Führungsloch in eine Arbeitsstellung am Grundkörper gebracht. Während des Erzeugens der Dübellöcher in dem Plattenkörper ist es entscheidend, dass die Bohrschablone mit dem Führungsloch sicher zum Grundkörper fixiert wird. Das Fixieren erfolgt üblicherweise mit mindestens einer von Hand betätigbaren Feststellschraube.

Mit DE4228285A1 jedenfalls das Problem einer einfachen und schnellen Fixierung an einer vertikalen Tür nicht gelöst, da die Feststellschraube zu betätigen ist.

Aus EP3156161B1 geht eine Vorrichtung zum Ausrichten von Bohrwerkzeugen relativ zu Plattenkörpern, insbesondere Dübelbohr-Lehre, mit einem Grundkörper, der mit mindestens einem Plattenkörper in Anlage bringbar ist, wenigstens einem Zentrierelement) zum Ausrichten des Grundkörpers relativ zum Plattenkörper, und einer Bohrschablone mit mehreren Führungslöchern für Bohrwerkzeuge unterschiedlichen Durchmessers, wobei die Bohrschablone verstellbar am Grundkörper aufgenommen ist, einer Schnellspanneinrichtung zum Fixieren von zumindest der Bohrschablone relativ zum Grundkörper, dadurch gekennzeichnet, dass die Schnellspanneinrichtung eine Justiereinrichtung zum Verstellen der Größe einer mittels der Spanneinrichtung erzeugten und auf die Bohrschablone einwirkenden Spannkraft aufweist. Erfindungsgemäß wird erreicht, dass mit Hilfe der Schnellspanneinrichtung die Bohrschablone auf einfache und darüber hinaus auf sichere Art und Weise in ihrer jeweiligen Arbeitsstellung relativ zum Grundkörper fixiert werden kann. Ein zeitaufwändiges Lösen möglicher, die Bohrschablone am Grundkörper fixierender Feststellschrauben kann somit entfallen, wodurch das Verstellen der Bohrschablone und ein damit verbundener Wechsel eines Führungsloches in die jeweilige Arbeitsstellung am Grundkörper vereinfacht und zeitverkürzt durchgeführt werden kann. Mithilfe der Justiereinrichtung erfolgt eine bevorzugt individuelle Voreinstellung der durch die erfindungsgemäße Schnellspanneinrichtung auf die Bohrschablone einwirkenden Spannkraft. Darüber wird die Größe der auf den Spannhebel aufzubringenden Verstellkraft, in Abhängigkeit von der veränderbaren Spannkraft, angepasst. Gemäß einer bevorzugten Weiterbildung weist das Zentrierelement eine am Anschlag vorstehende Zentrierspitze auf, welche im Wesentlichen in Richtung der Zentrierachse verstellbar am Anschlag angeordnet ist. Mithilfe des Zentrierelements erfolgt insbesondere ein Abgreifen, beziehungsweise Abtasten eines Dübelloches in einem Plattenkörper, der als Ausgangsbasis beziehungsweise Muster für das Bohren des entsprechenden Dübelloches im jeweils anderen Plattenkörper dient. Das Zentrierelement weist einen Zentrierspitze auf, deren äußerster Durchmesser größer ist als das mit der erfindungsgemäßen Vorrichtung, auch bezeichnet als Dübelbohr-Lehre, erzeugbare Dübelloch. Das Zentrierelement ist derart am Anschlag aufgenommen, dass es im Wesentlichen in Richtung der sich bildenden Zentrierachse relativ zum Anschlag bewegbar ist. Damit ist sichergestellt, dass der Anschlag mit seiner Führung beziehungsweise Ausrichtfläche jeweils vollflächig in Anlage mit einer Stirnfläche oder einer Breitenfläche des Plattenkörpers gelangt, worüber eine positionsgenaue Ausrichtung der Vorrichtung an den Plattenkörpern gewährleistet ist. Mit der verstellbaren Anordnung des Zentrierelementes in Richtung seiner Zentrierachse am Anschlag ist bewirkt, dass, unabhängig von der Größe der zu erzeugenden Dübellöcher, mit einem Zentrierelement bereits erzeugte Dübellöcher abgetastet werden können.

Bei EP3156161B1 erfolgt keine Fixierung und schnelle Selbstausrichtung der Bohrlehre am Werkstück, sondern nur eine Ausrichtung und Fixierung einer Bohrschablone mittels eines (verstellbaren) Schnellspannsystems mit oder ohne Spannhebel an einem weiteren Grundkörper, der seinerseits an das Werkstück angelegt wird. Weiter ist ein Zentrierelement vorhanden, welches zur Abmessung weiteren Bohrlöcher im Verhältnis zu vorhandenen Bohrlöchern dient. Eine Einwirkung der Schnellspanneinrichtung auf das Zentrierelement findet nicht statt, sondern ermöglich lediglich das Lösen und Justieren der Bohrschablone mit unterschiedlichen Bohrlöchern. In Ansprüchen 10, 11 findet sich noch die Offenbarung einer verstellbar aufgenommenen am Grundkörper aufgenommenen Abstandslehre, wobei die Abstandslehre mittels der Schnellspanneinrichtung am Grundkörper aber nicht am Plattenkörper (Werkstück) fixierbar.

EP 1 595 627 A2 zeigt eine Bohrlehre zum Fertigen von Schrägbohrungen mit einem Schlittenträger und einem dazu schiebbeweglich gehaltenen Schlitten. Der Schlitten weist schräge Führungskanäle für einen Bohrer zum Erzeugen der Schrägbohrungen auf. Der Schlitten ist über eine Sicherungseinrichtung relativ zum Schlittenträger positionierbar. EP 1 595 627 A2 zeigt aber keine Selbstausrichtung und Fixierung der Bohrlehre an einen Grundkörper und schon gar nicht an einen vertikalen Grundkörper.

US 20140178141 A1 lehrt ein Bohrführungswerkzeug, das eine erste und eine zweite Spannvorrichtung umfasst. Diese Spannvorrichtungen besitzen jeweils einen Blockabschnitt, in den mindestens ein seitliches Bohrführungsloch integriert ist, das durch den Blockabschnitt hindurch verläuft und mit einer Klemmfläche desselben in Verbindung steht. Zusätzlich ist ein Armabschnitt vorhanden, der sich von einem oberen Bereich des Blockabschnitts erstreckt. Bei der Anwendung entsteht ein Sichtfenster, wenn die erste und die zweite Spannvorrichtung an einem zu bohrenden Objekt angebracht werden. Dieses Sichtfenster ermöglicht es dem Benutzer, das zwischen den Klemmflächen der Spannvorrichtungen eingespannte Objekt zu sehen.

In einem weiteren Aspekt umfasst das Bohrführungswerkzeug eine Vielzahl von seitlichen Bohrführungsbohrungen, die durch den Blockabschnitt hindurch verlaufen und mit einer Klemmfläche verbunden sind. Zusätzlich sind mindestens zwei zentrale Bohrführungsbohrungen im Armabschnitt der Spannvorrichtungen integriert. Weiterhin ist ein Einstellschlitz in einem Teil des Armabschnitts ausgebildet, und eine Befestigungsbohrung befindet sich ebenfalls im Armabschnitt. Eine Schraube kann durch den Einstellschlitz und in die Befestigungsbohrung geführt werden, um den Abstand zwischen den Klemmflächen einzustellen und durch Festziehen der Schraube zu fixieren.

Darüber hinaus zeigt die Erfindung eine Ausführungsform, bei der die Spannvorrichtungen jeweils einen inneren und einen äußeren Arm umfassen. Der innere Arm einer Spannvorrichtung ist so gestaltet, dass er in einen Schlitz passt, der zwischen dem inneren und äußeren Arm der anderen Spannvorrichtung ausgebildet ist. In dieser Ausführung sind ein Federschlitz und eine Feder vorgesehen, die in diesen Schlitz eingesetzt wird. Die Feder ist an den ersten und zweiten Enden mit den Spannvorrichtungen verbunden, und ein Federstift durchdringt die Vorrichtungen, um die Feder zu befestigen. Dies ermöglicht, dass die Spannvorrichtungen durch die Federkraft flexibel zusammengehalten werden und die Klemmflächen gegen die Federkraft auseinandergezogen werden können.

Zwar zeigt die Druckschrift entsprechend dem Gegenstand nach Patentanspruch 1 eine Bohrlehre oder Schablone, die sich am Werkstück mittels einer von der Bohrlehre oder Schablone ausgehenden, auf eine Referenzfläche einwirkenden Kraft stabil selbst ausrichtet beziehungsweise fixiert. Diese einwirkende Kraft wird durch ein Federelement erzeugt, wodurch eine präzise Positionierung und Fixierung der Bohrlehre am Werkstück erreicht wird (siehe Figuren 12 bis 15). Allerdings handelt es sich bei den Klemmflächen um Referenzflächen und nicht um Referenzpunkte beziehungsweise Zentrierpunkte.

Mit US 20140178141 A1 kann keine geometrische Ausrichtung oder Selbstausrichtung erreicht werden. Im Gegensatz dazu wird eine präzise geometrische Festlegung und Selbstausrichtung bei Arbeiten anhand Referenzpunkten bei Türen dringend benötigt, um eine genaue Positionierung von Bohrungen oder Einbringstellen sicherzustellen. Eine solche Funktion ist essenziell, da bei flächigen Werkstücken keine weiteren Bezugspunkte oder mechanischen Führungshilfen vorhanden sind, die die präzise Positionierung unterstützen könnten.

DE 10 2004 037 057 A1 zeigt eine Bohrlehre, die zur präzisen Führung eines Bohrers dient. Nach den Merkmalen des ersten Anspruchs umfasst die Bohrlehre einen Grundkörper mit mindestens einer Führungsbohrung, die die genaue Führung eines Bohrers ermöglicht. Weiterhin ist die Bohrlehre mit Klemm- oder Haltevorrichtungen ausgestattet, die eine Befestigung der Bohrlehre am Werkstück erlauben. Diese Haltevorrichtungen sind verstellbar, sodass sie an die Geometrie des jeweiligen Werkstücks angepasst werden können.

Die Vorrichtung ist außerdem mit Flanschfedern (517) ausgestattet, die als Bestandteil der Flansche dienen. Diese Flansche bilden die Hauptstruktur, an der die Flanschfedern angebracht sind, und ermöglichen die Übertragung der Klemmkraft auf das Werkstück. Durch die "Anflansch"-Wirkung liegen die Flanschfedern (517) flächig an der Oberfläche des Werkstücks an und sorgen für eine gleichmäßige Verteilung der Spannkraft. Dies stabilisiert die Fixierung der Bohrlehre und verhindert ein Verrutschen während des Bohrvorgangs. Gleichzeitig ermöglichen die Flansche in Verbindung mit den Flanschfedern eine Anpassung an Werkstücke mit unterschiedlichen Geometrien.

Trotz dieser mechanischen Vorteile erfolgt die Fixierung und Ausrichtung der Bohrlehre vollständig durch manuelle Justierung der Klemmvorrichtungen. Eine automatische oder selbsttätige Ausrichtung anhand eines Referenz- oder Zentrierpunktes ist nicht vorgesehen. Diese manuelle Einstellung erfordert Zeit und präzise Handhabung, wodurch eine schnelle Montage nicht möglich ist. Dies ist besonders nachteilig bei flächigen Werkstücken wie Türen, bei denen eine schnelle und präzise Positionierung entscheidend ist, um effizient und fehlerfrei arbeiten zu können. Die Vorrichtung der DE 10 2004 037 057 A1 bietet daher keine Lösung für eine selbstausrichtende und zeitsparende Montage.

Die Aufgabe ist, eine selbstausrichtende Bohrlehre/Schablone zu Verfügung zu stellen, die zugleich am Werkstück fixiert wird und vorzugsweise im Bereich des schnellen, einfachen und massenweisen Einbaus von Türdrückergarnituren, Schlössern und Rosetten und dergleichen Anwendung finden und eine schnelle sichere Verwendung zu gewährleisten, wird durch die Erfindung nach Anspruch 1 gelöst, nämlich Bohrlehre/Schablone (1), dadurch gekennzeichnet, dass diese sich zur geometrischen Festlegung der Bohrungen/Einbringstellen (2) anhand des Werkstücks (3) und am Werkstück (3) mittels einer von der Bohrlehre/Schablone (1) ausgehenden auf einen Referenzpunktes/Zentrierpunktes (4) einwirkenden Kraft (5) stabil selbst ausrichtet bzw. fixiert. Dabei wird die einwirkende Kraft durch ein Federelement (6) erzeugt.

Vorzugsweise wird die Bohrlehre (1) so ausgeführt, dass die Bohrlehre/Schablone (1) aus einem Rahmen (7) mit einer Führung und einem darin eingebringbaren beweglichen Schlitten (8) besteht, der ein Zentrierelement (9) trägt, dabei kann der Schlitten (8) austauschbar gestaltet werden. Dabei kann auf dem Schlitten (8) auch die Bohrschablone (2), als geometrisches Festlegungsmittel (2), aufgebracht werden.

Der Schlitten (8) ist dabei so ausgebildet, dass er unter Überwindung einer Federkraft (6) verschieblich ausgestaltet ist, so dass der Monteur die Bohrlehre (1) mit einer Hand aufspannen kann und mit einem Werkstück (3) bspw. mit einer Tür (3) verklemmen kann.

Dabei wirkt Bohrlehre/Schablone (1) bzw. der Schlitten (8) über das Zentrier-/Referenzelement mit (9) anderen Elementen (10) zur Festlegung der Bohrlehre/Schablone bspw. eines Anlagewinkels/Anschlagwinkel (1) so zusammen, dass die Bohrlehre (1) festgelegt wird und nicht mehr gehalten oder festgeschraubt werden muss. Denkbar ist auch, dass das andere Element ein Klebestreifen (10) ist bzw. Krallen oder ähnliche Befestigungsmittel (10) Verwendung finden.

Dabei kann als Referenzpunkt (4) ein Einbringelement für Mitnehmerelemente, wie Mehrkante, oder Schlösser bzw. Schlossnüsse (4) dienen und hierdurch Bohrlöcher für Türdrückergarnituren und Schlösser geometrisch (2) festgelegt werden.

Dabei sollt das Referenz-/Zentrierelement (9) so ausgestaltet werden, dass es in handelsübliche Schlossnüsse (4) passend oder anpassbar eingebracht werden kann. Handelsübliche Schlossnüsse haben einen Durchmesser von 5 - 10 mm. Sie liegen aber meist in Durchmessern vor: 7 mm, 8 mm oder 8,5 mm.

Dabei ist die Bohrlehre (1) so ausgestaltet, dass sie mit einer Hand an das Werkstück (3) angehalten wird und mit einer Hand, vorzugsweise dem Daumen oder anderen Finger, der Schlitten (8) unter Überwindung einer Federkraft (6) das Zentrier-/Referenzelement (9) an oder in den Referenz-/Zentrierpunkt (4) eingebracht wird und der Schlitten (8) losgelassen werden kann, wobei die Bohrlehre fest fixiert an der vertikalen Tür (3) vorliegt.

Der Schlitten kann dabei so ausgebildet werden, dass einer eine Abrundung/Vertiefung (11) für einen Daumen oder einen anderen Finger aufweist.

Im nächsten Schritt werden durch die Bohrschablone (1) selbst die fluchtenden Bohrlöcher gesetzt. Nach Abschluss der Bohrungen wird das Zentrier-/Referenzelement (9) abgezogen, wobei die Federkraft so eingesetzt wird, dass die Bohrschablone (1) mit einer oder zwei Händen abziehbar gestaltet, d.h. die Federkraft (6) überwindbar ist, um sofort wieder am nächsten Werkstück eingesetzt werden zu können. Vorzugsweise erfolgt die Bedienung mit einer Hand.

### Bezugszeichen:

- 1: Bohrlehre/Schablone
- 2: Geometrische Festlegung der Bohrungen/Einbringstellen
- 3: Werkstück/Tür
- 4: Referenzpunkt/Zentrierpunkt/Einbringöffnung für Mitnehmerelement/Schlossnuss
- 5: einwirkende Kraft/Kräfte
- 6: Federkraft/Federelement
- 7: Rahmen/Führung
- 8: Schlittenelement/Bewegungselement
- 9: Referenz-/Zentrierelement
- 10: Anderes Element/Anschlagwinkel
- 11: Betätigungselement
- 12: Einhausung/Röhren/Pipes
- 13: Feststellmittel/Einstellschraube

Die Figuren zeigt Anwendungen und bevorzugte Ausführungsformen der Erfindung:

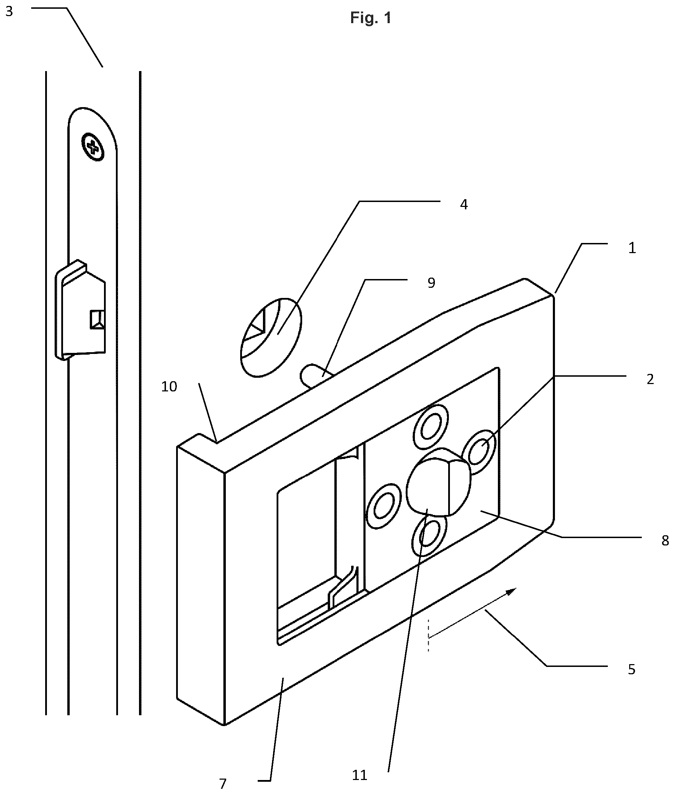

**Fig.1** zeigt die Bohrlehre/Schablone (1) relativ zum Werkstück (3) in diesem Fall eine Tür (3) und das Referenz-/Zentrierelement (9) ausgerichtet auf den Referenz-/Zentrierpunkt (4) hier die Einbringöffnung für eine Schlossnuss bzw. einen Türdrückermehrkant. Gezeigt werden Rahmen (7) und Schlittenelement (8), sowie die geometrische Festlegung der Bohrungen. Weiter wird die einwirkende Kraft gezeigt. Gut ersichtlich ist auch das Betätigungselement für Hand und Daumen. Die Bohrlehre/Schablone (1) befindet sich Einbringstellung.

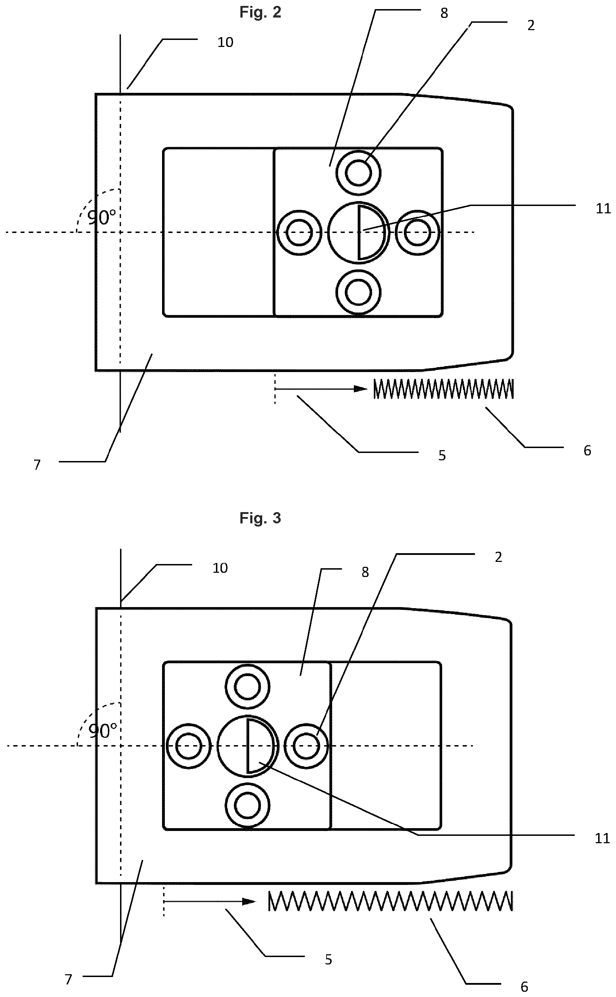

**Fig. 2** zeigt die Bohrlehre/Schablone (1) im Zustande der überwundenen Federkraft (5) und zeigt die wirkende Kraft (5) und den Zustand des komprimierten Federelements. Weiter sind der Rahmen (7) und das Schlittenelement (8) ersichtlich. Hier wird ebenfalls die Bohrlehre (1) vermittels des Referenz-/Zentrierelements (9) in die Schlossnuss (4) eingebracht. Zu sehen ist ferner wir die Bohrlehre anhand des Werkstücks, hier einer Tür (3) hierzu mittels eine Anschlagswinkels (10) in einem Winkel von 90° ausgerichtet wird.
**Fig. 3** zeigt die Bohrlehre/Schablone (1) im entspannten Transportzustand. Man sieht die potentielle Kraftrichtung (5) und das Federelement (6) in Ruhestellung.

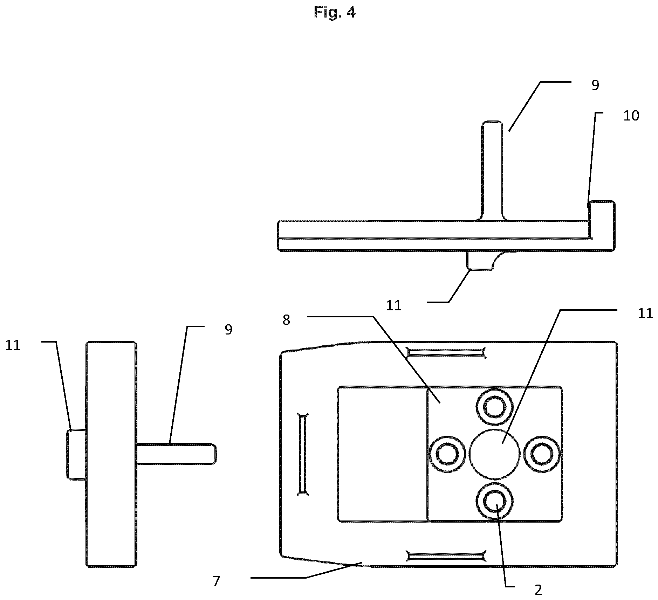

**Fig. 4** zeigt die abstrahierte Bohrlehre (1) insbesondere in der Draufsicht mit dem gut erkennbaren Referenz-/Zentrierelement (9) auf dem Schlittenelement (8) und Betätigungselement (11).

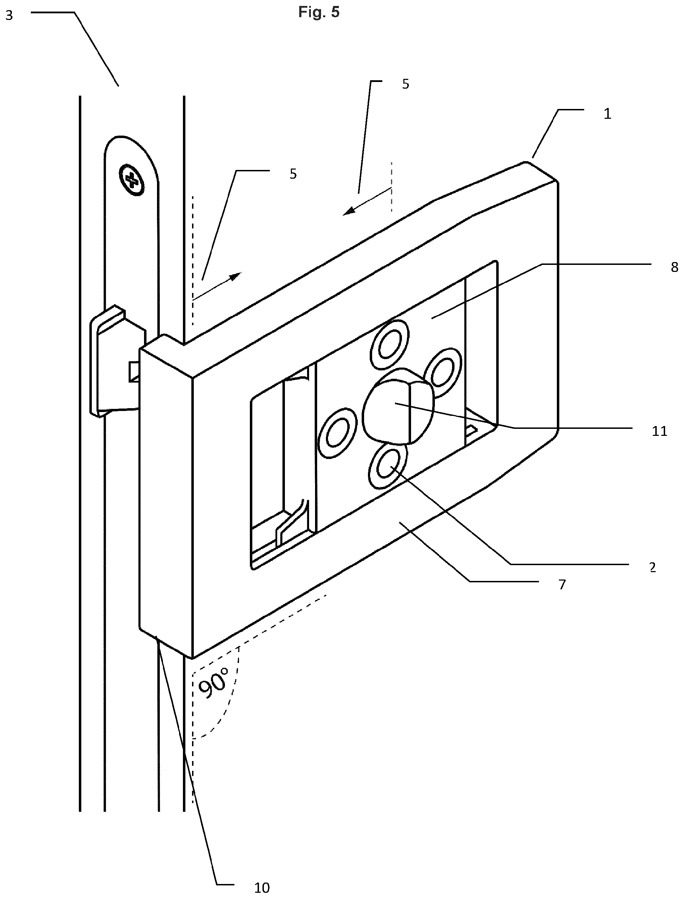

**Fig. 5** zeigt die Bohrlehre/Schablone (1) in Arbeitsstellung, d.h. das Referenz-/Zentrierelement (9) ist in die Schlossnuss (4) eingebracht. Aufgrund der über den Schlitten (8) und dem Referenz-/Zentrierelement (9) auf die Schlussnuss (4) und auch auf den Anschlagwinkel (10) wirkenden Kräfte (5) wird die Bohrlehre/Schablone (1) an der vertikalen Tür (3) fixiert.

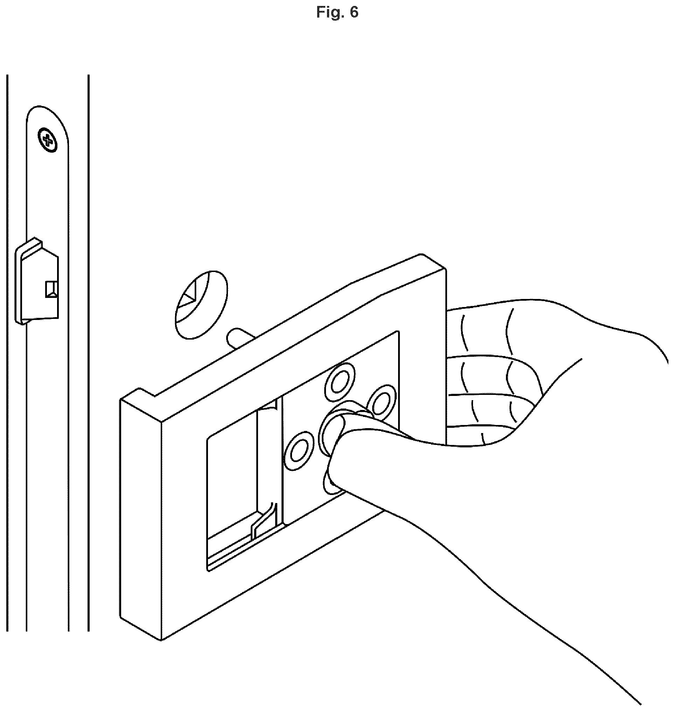

**Fig. 6** zeigt wie Fig. 1 die Einbringstellung, diesmal mit einer Hand, welche die Federkraft vermittels des Daumens überwindet und das Referenz-/Zentrierelement (9) in die Schlossnuss (4) einbringt.

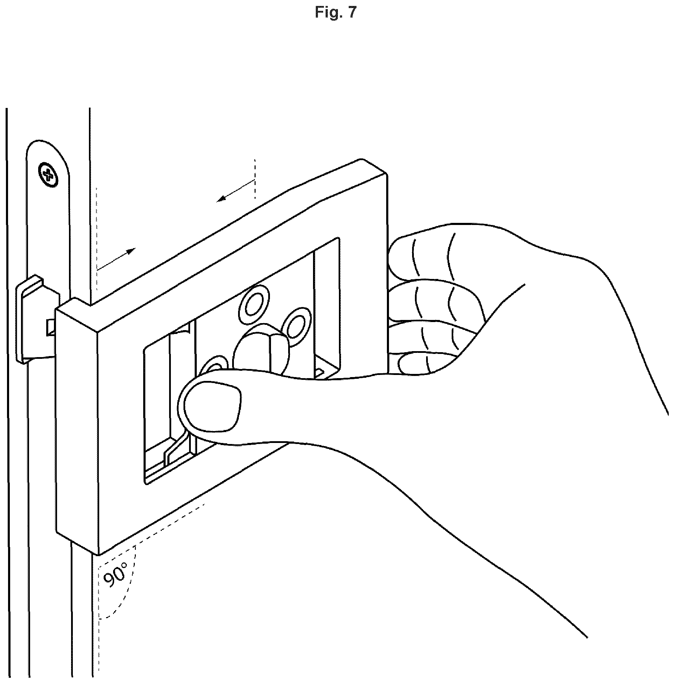

**Fig. 7** zeigt wie Fig. 5, die Bohrlehre/Schablone (1) wie diese gerade durch eine Hand eingebracht worden ist und sich in Arbeitsstellung befindet.

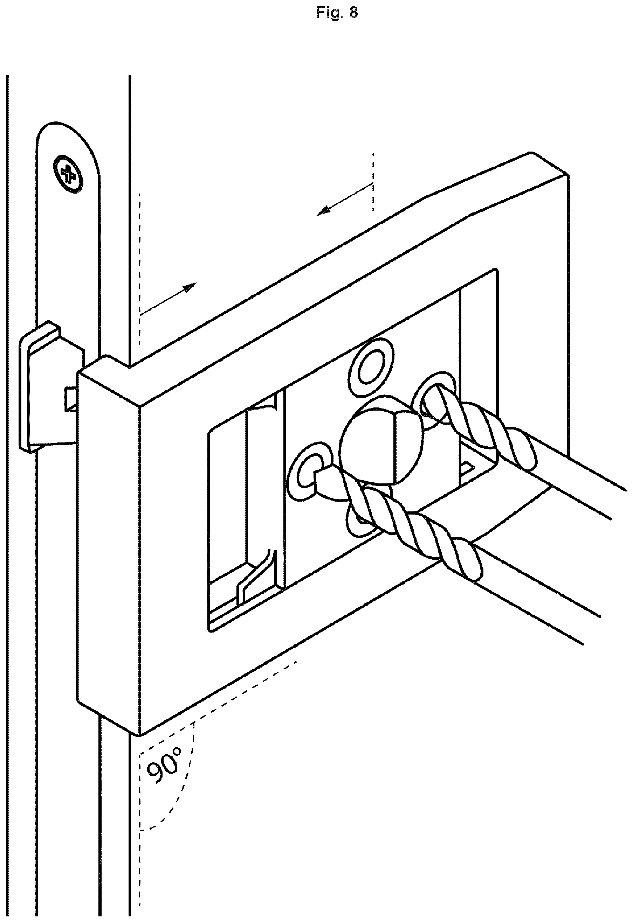

**Fig. 8** zeigt die Bohrlehre/Schablone (1) in Arbeitsstellung und das Einbringen der mit der geometrischen Festlegung der Bohrungen (2) fluchtenden Bohrlöcher zur Montage der Türdrückergarnitur.

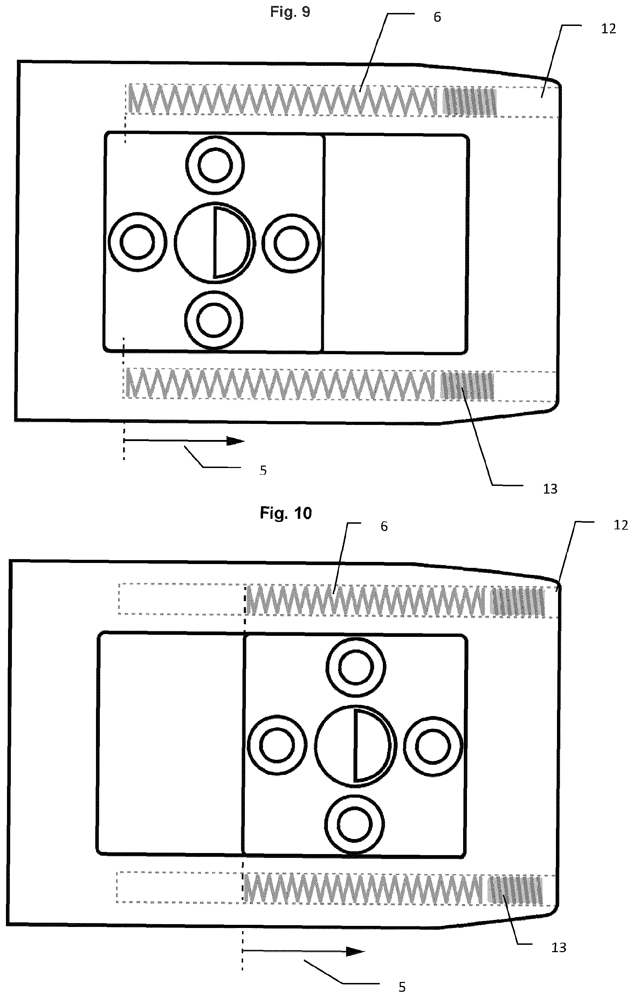

**Fig. 9** zeigt die Bohrlehre/Schablone (1) in Ruhestellung, dabei sind die im Rahmen eingehausten, z.B. Röhren/Pipes (12), und so geführten Federn/Federelemente (6), hier vorzugsweise parallel ausgeführt mit zwei Federelementen (6) erkennbar. Dabei kann die Kraft (5) vermittels eines Feststellmittels (13), hier eine Einstell- oder Madenschraube (13), erfolgen. In diesem Fall ist Einhausung von außen zugänglich zur Bedienung des Feststellmittels (13) gestaltet.
**Fig. 10** zeigt die Bohrlehre (1) in Einbringsstellung, dabei sind die im Rahmen eingehausten, z.B. Röhren/Pipes (12), und so geführten Federn/Federelemente (6), hier vorzugsweise parallel ausgeführt mit zwei Federelementen (6) erkennbar. Dabei kann die Kraft (5) vermittels eines Feststellmittels (13), hier eine Einstell- oder Madenschraube (13), erfolgen. In diesem Fall ist Einhausung von außen zugänglich zur Bedienung des Feststellmittels (13) gestaltet.

## Patentansprüche

1. Bohrlehre/Schablone (1), **dadurch gekennzeichnet, dass** diese sich zur geometrischen Festlegung einer Bohrung/Einbringstelle (2) anhand eines Werkstücks (3) und am Werkstück (3) mittels einer von der Bohrlehre/Schablone (1) ausgehenden auf einen Referenzpunktes/Zentrierpunktes (4) einwirkenden Kraft (5) stabil selbst ausrichtet bzw. fixiert.

2. Bohrlehre/Schablone (1) nach Anspruch 1, **dadurch gekennzeichnet, dass** die einwirkende Kraft (5) durch ein Federelement (6) erzeugt wird.

3. Bohrlehre/Schablone (1) nach einem der vorstehenden Ansprüche, **dadurch gekennzeichnet, dass** die Bohrlehre/Schablone (1) aus einem Grundelement (7) und einem darin eingebringbaren beweglichen Schlittenelement (8) besteht, der ein Referenz-/Zentrierelement (9) trägt.

4. Bohrlehre/Schablone (1) nach einem der vorstehenden Ansprüche, **dadurch gekennzeichnet, dass** das Grundelement (7) ein Rahmen/Führung (7) ist.

5. Bohrlehre/Schablone (1) nach einem der vorstehenden Ansprüche, dass das Schlittenelement (8) austauschbar gestaltet ist.

6. Bohrelement/Schablone (1) nach einem der vorstehenden Ansprüche, dass auf dem Schlittenelement (8) eine Bohrschablone (2) aufgebracht ist.

7. Bohrlehre/Schablone (1) nach einem der vorhergehenden Ansprüche, **dadurch gekennzeichnet, dass** das Schlittenelement (8) unter Überwindung einer Federkraft (5) verschieblich ausgebildet ist.

8. Bohrlehre/Schablone (1) nach Anspruch 7, dass die Federkraft (5) bzw. das Federelement (6) mittels der direkt einwirkenden Kraft einer menschlichen Hand überwindbar ist.

9. Bohrlehre/Schablone (1) nach einem der vorstehenden, **dadurch gekennzeichnet, dass** der Schlittenelement (8) mit anderen Elementen (10) zur Festlegung der Bohrlehre/Schablone (1), zusammenwirkt.

10. Bohrlehre/Schablone (1) für Türen, Fenster und dgl. (3), nach Ansprüchen 3 bis 9, das als Referenz-/Zentrierpunkt (4) ein Einbringelement für Mitnehmerelemente, wie Mehrkante, oder Schlösser, z.B. eine Schlossnuss, dient und hierdurch Bohrlöcher (2) für Türdrückergarnituren und Schlösser geometrisch festgelegt werden.

11. Bohrlehre/Schablone (1), nach Anspruch 10, **dadurch gekennzeichnet, dass** das Referenz-/Zentrierelement (9) an handelsübliche Schlossnüsse (4) angepasst bzw. anpassbar gestaltet ist.

12. Bohrlehre/Schablone (1) nach einem der vorstehenden Ansprüche, **dadurch gekennzeichnet, dass** das Federelement (6) oder die Federelemente (6) in einen Rahmen mittels Röhren/Pipes (12) eingebracht sind.

13. Bohrlehre/Schablone (1) nach Anspruch 10, **dadurch gekennzeichnet, dass** die auf den Referenz-/Zentrierpunkt (4) wirkende Federkraft mittels eine Feststellmittels (13) eingestellt werden kann.

14. Betätigungselement (11), für eine Bohrlehre/Schablone (1) nach einer der vorhergehenden Ansprüche, dass diese an die Finger oder Daumenform angepasst ausgestaltet ist.
